# EUROPEAN PATENT APPLICATION

(11) **EP 4 516 696 A1**
(43) Date of publication of application: **05.03.2025**
(21) Application number: 23796370.7
(22) Date of filing: 25.04.2023
(51) Int. Cl.: B65D 88/12

(54) **CONTAINER MODULE AND FUNCTION UNIT**

(30) Priority: 29.04.2022 JP 2022075610; 14.11.2022 JP 2022181783
(71) Applicant: Niterra Co., Ltd., Nagoya-shi, Aichi 461-0005 (JP)
(72) Inventor: MATSUZAKI Kana, Nagoya-shi, Aichi 461-0005 (JP); YABUHANA Masaki, Nagoya-shi, Aichi 461-0005 (JP); FUNAHASHI Yoshihiro, Nagoya-shi, Aichi 461-0005 (JP)
(74) Representative: Zimmermann & Partner Patentanwälte mbB
(86) International application number: PCT/JP2023/016257
(87) International publication number: WO 2023/210630

(57) **Abstract**

A container module and a functional unit which can reduce the width of a transport container are provided. A container module (10) includes a transport container (11) and a plurality of functional units (19) accommodated in the transport container, wherein the functional units are disposed in an array in the transport container. All the heights of the plurality of functional units are greater than their widths in a direction in which the functional units are arrayed. Also, the functional unit is used in such a manner that a plurality of the functional units are disposed at predetermined positions in an array, and the height of the functional unit is greater than the width of the functional unit in a lateral direction in which the functional units disposed at the predetermined positions are arrayed.

## Description

### TECHNICAL FIELD

The present invention relates to a container module in which a plurality of functional units are accommodated in a transport container, and to a functional unit.

### BACKGROUND ART

Patent Literature 1 discloses a prior art related to a container module in which an engine and a generator (a plurality of functional units) are arrayed and accommodated in a transport container.

### CITATION LIST

### PATENT LITERATURE

Patent Literature 1: JP5925340B

### SUMMARY OF INVENTION

### TECHNICAL PROBLEM

The prior art has a problem that, since the width of the functional units as measured in the direction in which the functional units are arrayed is greater than the height of the functional units, the width of the transport container in which the functional units are arrayed and accommodated becomes large.

The present invention has been accomplished so as to solve this problem, and an object of the invention is to provide a container module and a functional unit which can reduce the width of a transport container.

### SOLUTION TO PROBLEM

In order to achieve this object, a container module of the present invention comprises a transport container and a plurality of functional units accommodated in the transport container, wherein the plurality of functional units are disposed in an array in the transport container, and all heights of the plurality of functional units are greater than their widths in a lateral direction in which the functional units are arrayed.

A functional unit of the present invention is used in such a manner that a plurality of the functional units are disposed at predetermined positions in an array, wherein the functional unit has a height greater than the width of the functional unit in a lateral direction in which the functional units disposed at the predetermined positions are arrayed.

### ADVANTAGEOUS EFFECTS OF INVENTION

According to a first mode, the heights of all the functional units are greater than their widths in the lateral direction in which the functional units are arrayed. Therefore, it is possible to reduce the width of the transport container which accommodates the functional unit, while securing the volumes of the functional units.

According to a second mode, in the first mode, the functional units are arrayed in a line in the transport container. Therefore, the functional units can be easily disposed in and removed from the transport container.

According to a third mode, in the first or second mode, pedestals on which the functional units are disposed are provided. This facilitates installation of the functional units in the transport container.

According to a fourth mode, in the third mode, a pipe extending in the lateral direction in which the functional units are arrayed is disposed under the pedestals. Accordingly, the pipe can be easily connected to the functional units installed in the transport container.

According to a fifth mode, in the fourth mode, first joints disposed on the transport container are connected to the pipe, and second joints disposed on the functional units are connected the first joints. Therefore, connection between the functional units and the pipe is facilitated.

According to a sixth mode, in the third mode, rolling elements disposed in a portion of each pedestal with which the functional unit comes into contact are moved upward and downward in relation to the pedestal by the lifter. As a result of rubbing against a moving functional unit, the rolling elements rotate, whereby the functional unit moves in the first direction intersecting the lateral direction in which the functional units are arrayed, and the functional unit is disposed on the pedestals. Therefore, the functional unit transported to the pedestals can be moved by using the rolling elements. When the rolling elements are moved downward by using the lifter, the functional unit can be disposed on the pedestals.

According to a seventh mode, in the sixth mode, a guide located between the functional units located adjacent to each other extends in the first direction. When the functional unit is moved by using the rolling elements, the functional unit can be positioned by the guide.

According to an eighth mode, in the seventh mode, friction reducing portions for reducing frictional force acting between the guide and the functional units are provided on the guide. This facilitates movement of the functional units along the guide.

According to a nineth mode, in the third mode, the pedestals are individually provided for each of the functional units. Therefore, the functional units can be disposed in place.

According to a tenth mode, in the nineth mode, the transport container has an air inlet opening and an air outlet opening. Spaces respectively provided under the pedestals are continuous in the lateral direction in which the functional units are arrayed. The spaces communicate with at least one of the air inlet opening and the air outlet opening. The interior of the transport container can be cooled by utilizing the flow of air under the pedestals.

According to an eleventh mode, in the tenth mode, a first partition for separating the spaces provided under pedestals from a residual space within the transport container other than the spaces is provided on the pedestals. The first partition can reduce leakage of air flowing under the pedestals and secure the flow of air under the pedestals.

According to a twelfth mode, in the tenth mode, a gap is present between the pedestals located adjacent to each other. Therefore, the air flowing under the pedestals can be caused to flow into the space between the functional units located adjacent to each other, through the gap between the pedestals.

According to a thirteenth mode, in the sixth mode, stoppers restrict movements of the functional units in the first direction. Since each of the stoppers restricts movements of two of the functional units located adjacent to each other, the number of stoppers can be reduced as compared with the case where a stopper is individually provided for each functional unit.

According to a fourteenth mode, in the sixth mode, a first stopper restricts movement of a functional unit in the first direction, and a second stopper restricts movement of the functional unit in a second direction opposite the first direction. First and second restricting portions are provided on the functional unit. The first stopper and the second stopper restrict upward movement of the functional unit via the first restricting portion and the second restricting portion. Therefore, the number of stoppers can be reduced as compared with the case where a stopper is provided for each direction in which movement is restricted.

According to a fifteenth mode, in the sixth mode, a value obtained by dividing the height of the functional units by a height to an upper end of an opening of the transport container from the pedestals falls in the range of 0.9 to 0.99. Since the height of the functional units can be increased in a range in which the functional units can be accommodated in the transport container, it is possible to secure the volume of each functional unit whose width is small as compared with the height. Therefore, many devices can be installed in the functional unit. Also, when the functional unit is placed on the pedestals or removed from the pedestals, the functional unit can be tilted upward or downward by an amount corresponding to the gap formed between the functional unit and the upper end of the opening of the transport container. Therefore, movement of the functional unit becomes easy.

According to a sixteenth mode, in the sixth mode, an end portion of each of the functional units in the first direction decreases in width in the lateral direction (in which the functional units are arrayed) toward its end in the first direction. This facilitates insertion of a functional unit between already disposed functional units.

According to a seventeenth mode, in the sixth mode, end portions of the functional units in the second direction opposite the first direction have the same width in the lateral direction, in which the functional units are arrayed. Therefore, the functional units can be disposed in a well-arranged state.

According to an eighteenth mode, in the sixth or seventh mode, a guide disposed along the pedestals and extending in the first direction is provided, and each of the functional units has a third restricting portion which engages with the guide when the functional unit moves in the first direction. The functional units can be positioned by the guide and the third restricting portion.

According to a nineteenth mode, the heigh of the functional unit is greater than the width of the functional unit in the lateral direction in which the functional units disposed at the predetermined positions are arrayed. Therefore, it is possible to reduce the width of an area occupied by the plurality of functional units arrayed laterally, while securing the volumes of the functional units. Since movement in the lateral direction is restricted as a result of engagement of the third restricting portion with a member provided at a corresponding one of the predetermined positions, positioning of the functional units is possible.

According to a twentieth mode, the heigh of the functional unit is greater than the width of the functional unit in the lateral direction in which the functional units disposed at the predetermined positions are arrayed. Therefore, it is possible to reduce the width of the area occupied by the plurality of functional units arrayed laterally, while securing the volumes of the functional units. Since the width, in the lateral direction, of an end portion of the functional unit in the first direction intersecting the lateral direction decreases toward its end in the first direction, it becomes easy for a functional unit to enter between already disposed functional units.

According to a twenty-first mode, the heigh of the functional unit is greater than the width of the functional unit in the lateral direction in which the functional units disposed at the predetermined positions are arrayed. Therefore, it is possible to reduce the width of the area occupied by the plurality of functional units arrayed laterally, while securing the volumes of the functional units. Since movement in the first direction is restricted as a result of engagement of the first restricting portion with a member provided at a corresponding one of the predetermined positions, positioning of the functional units is possible.

### BRIEF DESCRIPTION OF DRAWINGS

FIG. 1 is a perspective view of a container module in a first embodiment.
FIG. 2 is a block diagram of a container module.
FIG. 3 is a perspective view of a base of a transport container.
FIG. 4 is a plan view of the base of the transport container.
FIG. 5(a) is a sectional view of a container module in which a functional unit is disposed in a transport container, and FIG. 5(b) is a plan view of the functional unit.
FIG. 6 is a sectional view of a container module in a second embodiment.
FIG. 7(a) is a plan view of a functional unit of a container module and a base of a transport container of the container module in a third embodiment, and FIG. 7(b) is a plan view of the base on which the functional unit is disposed.
FIG. 8 is a perspective view of a functional unit of a container module in a fourth embodiment.
FIG. 9 is a perspective view of a base and a functional unit of a container module in a fifth embodiment.

### DESCRIPTION OF EMBODIMENTS

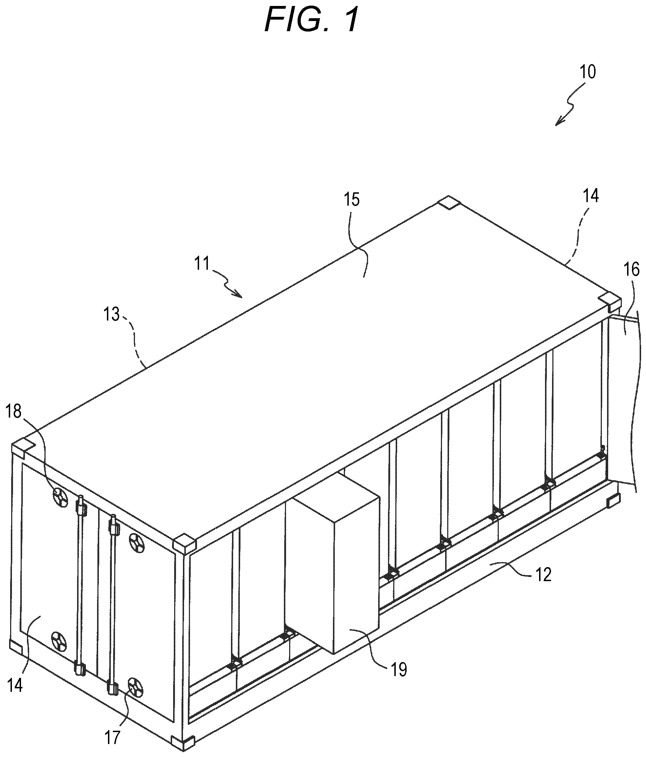

Preferred embodiments of the present invention will now be described with reference to the attached drawings. FIG. 1 is a perspective view of a container module 10 in a first embodiment. The container module 10 includes a transport container 11 and a plurality of functional units 19 accommodated in a transport container 11. In the present embodiment, eight functional units 19 are disposed in the transport container 11.

The transport container 11 is a rectangular parallelepipedic larger container which is formed mainly of steel material and can be used for freight transport. The transport container 11 loaded with articles can be transported by means of a train, a truck, a ship, or the like, and can be used as a warehouse on land. An example of the transport container 11 is a maritime transport container designed and manufactured according to ISO standards. In general, the transport container 11 is a dry container. Examples of the transport container 11 include a reinforced dry container and a dry container with auxiliaries necessary for operating the container module 10, which are attached to an external or internal portion of the dry container.

Since the functional units 19 are accommodated in the transport container 11, which has a mechanical strength for enduring handling at the time of shipment and storage, it is possible to assemble the container module 10 at a plant, transport the assembled container module 10 to a site as it is, and install it at the site. Therefore, it becomes possible to eliminate the necessity of a large scale construction for installing the assembled container module 10 at the site. Also, the capacity of a facility can be increased easily by stacking container modules 10 or arraying them laterally.

The transport container 11 includes a base 12 having a rectangular shape as viewed from above, a rear wall 13 provided along a longer side of the base 12, two side walls 14 provided along shorter sides of the base 12, a roof 15 which connects the rear wall 13 and the side walls 14, a front door (double doors) 16 provided along a longer side of the base 12 located opposite the rear wall 13. A portion of the front door 16 is not shown. The container module 10 is usually operated in a state in which the front door 16 is closed. In the present embodiment, each of the rear wall 13 and the side walls 14 is composed of double doors. However, as a matter of course, each of the rear wall 13 and the side walls 14 can be formed of a plate which cannot be opened and closed.

Air outlet openings 17 and air inlet openings 18 are provided in the side walls 14. The air outlet openings 17 are located at positions lower than the air inlet openings 18. A blower (not shown) for introducing external air into the transport container 11 is provided for each air inlet opening 18.

The functional unit 19 is a unit of an apparatus which plays a specific role. The container module 10 achieves a specific function by combined use of a plurality of functional units 19. The plurality of functional units 19 are arrayed from one side wall 14 of the transport container 11 toward the other side wall 14 of the transport container 11. The functional units 19 are elongated cuboids whose sizes are approximately equal to one another. In the present embodiment, the functional units 19 are arrayed in a line in the lateral direction of the transport container 11.

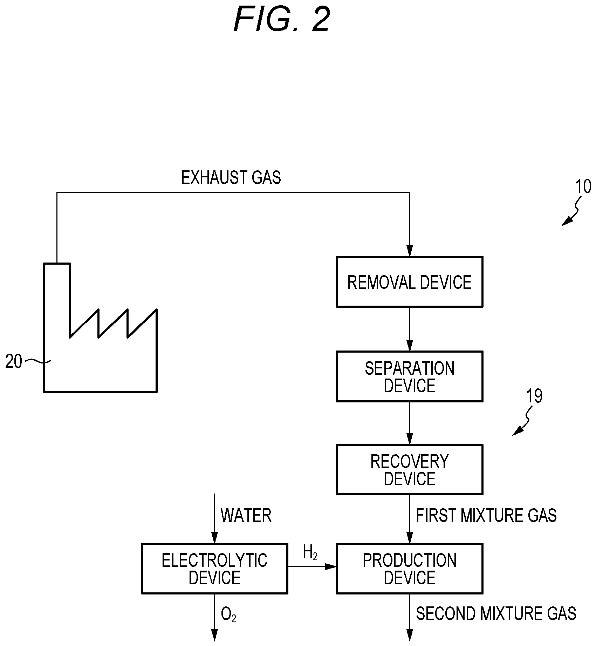

FIG. 2 is a block diagram of a container module 10. A container module 10 which recovers carbon dioxide contained in exhaust gas generated by an exhaust gas source 20 and produces a fuel by recycling the carbon dioxide as a carbon compound will be described below as one example. No particular limitation is imposed on the exhaust gas source 20 so long as the exhaust gas source 20 generates exhaust gas containing carbon dioxide. Examples of the exhaust gas source 20 include an electric power plant, a factory, a waste treatment facility, a natural gas field, and an oil field.

Any one of the functional units 19 provided in the container module 10 contains one or more devices selected from a removal device for removing water from exhaust gas, a separation device for separating nitrogen oxides contained in exhaust gas, a recovery device for separating carbon dioxide contained in exhaust gas and condensing the separated carbon dioxide, an electrolytic device for producing hydrogen and oxygen by electrolysis of water, a production device for producing a fuel by reducing carbon dioxide with hydrogen, a power supply (not shown) for supplying power to each device, and a compressor (not shown) for compressing a gas, thereby increasing its pressure. The fuel produced by the production device is a combustible product. Examples of the combustible product include methane, carbon monoxide, methanol, and formaldehyde.

Examples of the method for removing water (vapor) from exhaust gas in the removal device include condensation, physical absorption, and chemical reaction. Examples of common methods for removing nitrogen oxides from exhaust gas in the separation device are a wet method using caustic soda or the like and a dry method using an NOx removal catalyst and a reducing agent to reduce nitrogen oxides to nitrogen. Removal of water of exhaust gas by the removal device and removal of nitrogen oxides from exhaust gas make it possible to secure an efficiency of condensation of carbon dioxide by the recovery device.

A first mixture gas containing carbon dioxide separated and recovered from exhaust gas in the recovery deice is supplied to the production device. In the production device, for example, a catalyst is used to reduce the activation energy, thereby proceeding a chemical reaction from carbon dioxide to fuel.

The first mixture gas may contain impurities other than carbon dioxide in an amount of 10 vol% or more of the first mixture gas. It is preferred that the amount of impurities contained in the first mixture gas is small because the purity of fuel contained in a second mixture gas discharged from the production device increases. However, this requires a complex device for separating impurities from the first mixture gas. Accordingly, from the viewpoint of simplification of the container module 10, a certain degree of mixing of impurities is permissible.

Examples of the method for electrolyzing water in the electrolytic device include electrolysis of alkaline water, electrolysis of water by the mediation of a solid polymer electrolyte, and electrolysis of high-temperature steam by the mediation of a solid oxide electrolysis cell (SOEC). High-temperature steam electrolysis is preferable to alkaline water electrolysis and solid polymer electrolyte water electrolysis because it can produce a large amount of hydrogen with less power. In the case where the electrolytic device performs high-temperature steam electrolysis using SOEC and heat of chemical reaction generated by the production device is used to generate steam for the high-temperature steam electrolysis, the energy efficiency of the container module 10 increases. Therefore, high-temperature steam electrolysis is preferred.

In the container module 10, the functional units 19 are disposed in such a manner that a functional unit which generates the largest amount of heat and a functional unit which generates the smallest amount of heat are located adjacent to each other. An example of the functional unit which generates the largest amount of heat is a functional unit containing the electrolytic device. Since the functional unit which generates the largest amount of heat and the functional unit which generates the smallest amount of heat are located adjacent to each other, thanks to exchange of heat between the two functional units, it is possible to promote the radiation of heat from the functional unit which generates the largest amount of heat or to preheat a raw material used by the functional unit which generates the smallest amount of heat.

Although the second mixture gas discharged from the production device is allowed to contain, in addition to fuel, hydrogen and the components of the first mixture gas, the amount of gases which are contained in the second mixture gas and are other than fuel is preferably equal to or less than 45 vol% of the amount of the second mixture gas.

It is preferred that the second mixture gas produced by the container module 10 is utilized by a facility in the site which contains the exhaust gas source 20, because the cost associated with transport of the gas can be reduced. Since the size of the container module 10 can be reduced by simplifying it, a space necessary for installing the container module 10 can be reduced. Since the container module 10 can be individually installed for each exhaust gas source 20, carbon dioxide discharged from each exhaust gas source 20 can be individually recycled for the exhaust gas source 20 as a carbon source. The container module 10 can reduce emission of carbon dioxide, while producing a fuel of the minimum quality required for the use of the fuel by facilities in the site containing the exhaust gas source 20, rather than producing a fuel for sale.

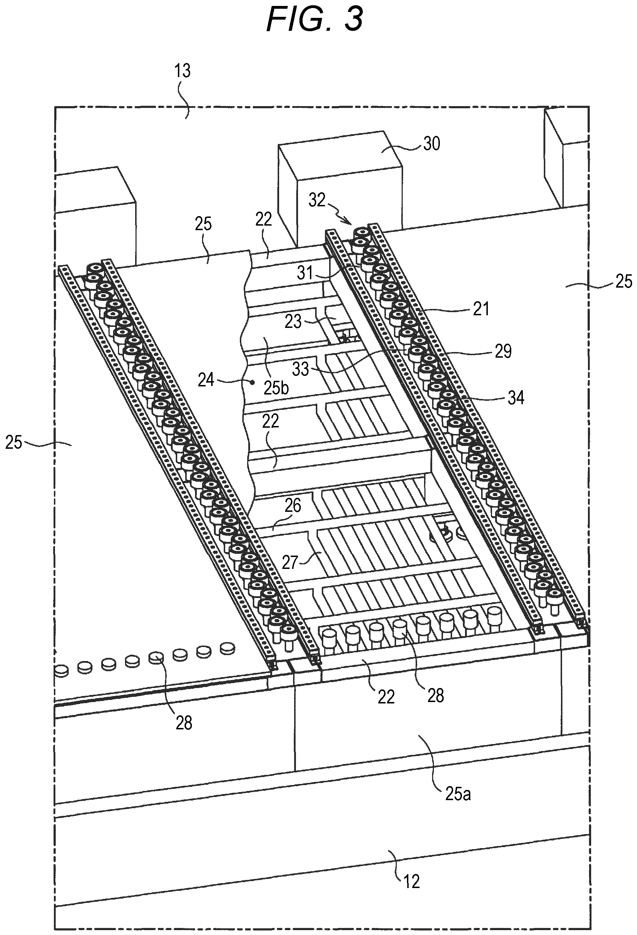

FIG. 3 is a perspective view of the base 12 of the transport container 11. In FIG. 3, a floor board 25 partially removed by a break line is shown. Here, the front door 16 side will be referred to as the front side, and the rear wall 13 side will be referred to as the rear side.

In the transport container 11, a plurality of pedestals 21 extending in a front-rear direction intersecting the rear wall 13 are provided on the base 12 at predetermined intervals in the lateral direction. A plurality of connection portions 22 which connect the pedestals 21 are provided at predetermined intervals in the front-rear direction. The pedestals 21 and the connection portions 22 provided in a lattice pattern are supported by a plurality of legs 23 provided on the base 12 in a scattered manner. As a result, an under-pedestal space (a space under the pedestals) 24 is provided between the pedestals 21 and the base 12. The floor board 25 is disposed on the connection portions 22. The top surfaces of the pedestals 21 are located at a position higher than the floor board 25. One functional unit 19 is disposed on a pair of pedestals 21.

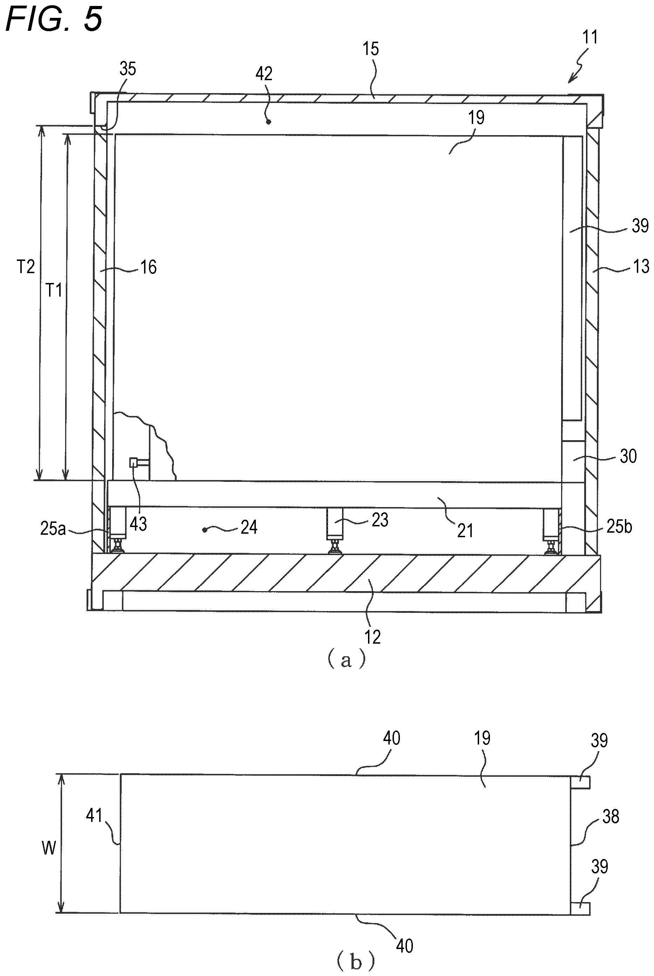

The under-pedestal spaces 24 provided under the pedestals 21 are continuous in the lateral direction in which the functional units 19 are arrayed. First partitions 25a are provided between the pedestals 21 and the front door 16 in a closed state (see FIG. 1). The first partitions 25a close the front sides of the under-pedestal spaces 24. First partitions 25b for closing the rear sides of the under-pedestal spaces 24 are provided between the rear wall 13 and the pedestals 21. The first partitions 25a and 25b are successively provided in the lateral direction of the pedestals 21 and the connection portions 22 and separate the under-pedestal spaces 24 from an above-pedestal space 42 (see FIG. 5(a)), which is a residual space in the transport container 11 other than the under-pedestal spaces 24. The above-pedestal space 42 is a space within the transport container 11 above the pedestals 21. The partitions 25a and 25b prevent flow of air between the above-pedestal space 42 and the under-pedestal spaces 24.

A plurality of pipes 26 are provided between the base 12 and the pedestals 21. The pipes 26 are pipes through which liquid and gas (raw materials and products of a chemical reaction and a purification process performed by the functional unit 19) and coolant for cooling the functional units 19 flow. Wiring (not shown) is provided along the pipe 26. The wiring is composed of electric wires for supplying electric power to the functional units 19. The pipe 26 and the wiring extend in the lateral direction in which the functional units 19 are arrayed. Pipes 27 branching from the pipes 26 extend forward along the pedestals 21. The wiring is disposed along the pipes 27. First joints 28 connected to the pipes 27 are disposed rearward of the first partitions 25a to be located near the first partitions 25a. Joints (not shown) connected to the wiring are also disposed near the first partitions 25a. Although the first joints 28 appear on the upper surface of the floor board 25, they are provided at a position lower than the top surfaces of the pedestals 21.

A plurality of rolling elements 29 are disposed on a portion (top surface) of each pedestal 21 with which a corresponding functional unit 19 contacts. The rolling elements 29 rotate in the front-rear direction when the functional unit 19 rubs against the rolling elements 29. The rolling elements 29 are provided in a scattered manner over the entire length of the pedestal 21 in the front-rear direction. Examples of the rolling elements 29 include balls and rollers. The rolling elements 29 are moved upward and downward in relation to the pedestal 21 by a lifter (not shown) disposed below the rolling elements 29. An example of the lifter is an elastic tube to which a fluid such as air or oil is supplied. The tube is disposed below the rolling elements 29 to extend along the pedestal 21.

When the fluid is supplied to the tube of the lifter, the tube expands so that the rolling elements 29 move upward and the rolling elements 29 partially protrude upward from the top surface of the pedestal 21. When a transported functional unit 19 is placed on the pedestal 21 and is then pushed toward the rear side (first direction), the functional unit 19 rubs against the rolling elements 29, whereby the rolling elements 29 rotate. Therefore, it is possible to move the functional unit 19 in the first direction along the pedestal 21 by applying a small force to the functional unit 19.

Stoppers 30 are provided between the rear ends of the pedestals 21 and the rear wall 13. Rubber and synthetic resins are examples of the material of the stoppers 30. In the present embodiment, the stopper 30 are attached to the rear wall 13. Each single stopper 30 is located rearward of two pedestals 21 located adjacent to each other. When the functional unit 19 moving in the first direction reaches the stopper 30, the functional unit 19 hits against the stopper 30, whereby movement of the functional unit 19 is restricted. The stopper 30 buffers the impact produced when the functional unit 19 hits against the stopper 30. Since one stopper 30 restricts movements of two functional units 19 located adjacent to each other, the number of the stoppers can be reduced as compared with the case where a stopper is individually provided for each functional unit 19.

A support portion 31 is provided between the pedestals 21 located adjacent to each other. The support portion 31 is a member extending in the front-rear direction along the pedestals 21 and is supported by legs 23. A guide 32 is provided on the support portion 31. The guide 32 includes a plurality of shafts 33 extending upward from the support portion 31 and rollers 34 provided on the shafts 33. When the support portion 31 is viewed from above, a line connecting the shafts 33 sequentially from the front side toward the rear side of the support portion 31 has a zigzag shape. The rollers 34 are provided at a position higher than the rolling elements 29. The guide 32 restricts movement of a corresponding functional unit 19 in the lateral direction when the rolling elements 29 rotate and the functional unit 19 moves forward or rearward. The guide 32 enables positioning of the functional unit 19 in the lateral direction.

When the rolling elements 29 rotate and the functional unit 19 moves, the functional unit 19 rubs against the rollers 34, whereby the rollers 34 rotate around the shafts 33. Since the rollers 34 function as friction reducing portions for reducing frictional forces acting between the guide 32 and the functional unit 19, it becomes easier to move the functional unit 19 forward and rearward along the guide 32.

When the fluid is removed from the tube of the lifter after the functional unit 19 having been moved in the first direction (rearward), the tube shrinks, whereby the rolling elements 29 move downward, and all the rolling elements 29 are located under the top surface of the pedestal 21. As a result, the functional unit 19 comes into engagement with the pedestal 21, and the functional unit 19 is fixed to the pedestal 21 by the frictional force between the functional unit 19 and the pedestal 21. After having placed the functional unit 19 on the pedestal 21, a fixture (not shown) for mechanically fixing the functional unit 19 may be attached to the pedestal 21, the floor board 25, and/or the support portion 31 so as to prevent the functional unit 19 from moving in the second direction (forward).

When the functional unit 19 fixed to the pedestal 21 is removed from the transport container 11, the fluid is supplied to the tube of the lifter so as to expand the tube, thereby raising the rolling elements 29. Since the rolling elements 29 rotate when the functional unit 19 rubs against the rolling elements 29, the functional unit 19 can be moved forward (in the second direction) along the pedestal 2. As a result, the functional unit 19 can be removed from the top of the pedestal 21.

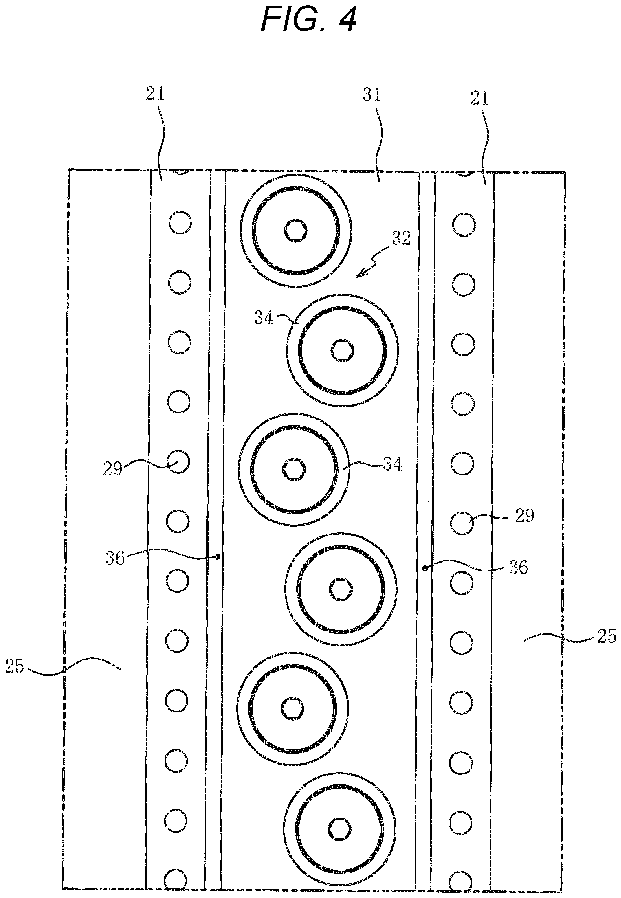

FIG. 4 is a plan view showing, on an enlarged scale, a portion of the base 12 of the transport container 11. In the transport container 11, gaps 36 are provided between each support portion 31 and the pedestals 21 located adjacent to each other with the support portion 31 intervening therebetween. Air within the transport container 11 flows between the under-pedestal spaces 24 (see FIG. 3) and the above-pedestal space 42 (see FIG. 5(a)) through the gaps 36.

FIG. 5(a) is a sectional view of the container module 10 in which a functional unit 19 is disposed in the transport container 11. FIG. 5(a) shows the functional unit 19 partially removed by a break line. FIG. 5(b) is a plan view of the functional unit 19 as viewed from above.

The functional unit 19 disposed in the transport container 11 has a rear face 38 which faces the rear wall 13 of the transport container 11. Second partitions 39 projecting rearward are provided on the rear face 38 of the functional unit 19. The second partitions 39 extends in the height direction along the rear face 38 of the functional unit 19, excluding a region where the rear face 38 hits against the stopper 30. In the present embodiment, the two second partitions 39 are provided on the rear face 38 such that they are separated from each other and extend along side faces 40 of the functional unit 19.

The air inlet openings 18 (see FIG. 1) are provided in the side wall 14 to be located at a position higher than the top surfaces of the pedestals 21. When the blowers provided at the air inlet openings 18 are operated, air on the outside of the transport container 11 enters the above-pedestal space 42. The air flows downward along the functional unit 19 and enters the under-pedestal spaces 24 through the gaps 36 (see FIG. 4). The second partitions 39 prevents the wind flowing along the side faces 40 of the functional unit 19 from flowing toward the rear face 38 of the functional unit 19. Since the wind can be blown against the side faces 40, which are larger in area than the rear face 38 of the functional unit 19, radiation of heat from the side faces 40 of the functional unit 19 can be promoted.

Since the first partitions 25a and 25b separate the under-pedestal spaces 24 and the above-pedestal space 42 from each other, the first partitions 25a and 25b can reduce leakage of air flowing under the pedestals 21 and secure the flow of air under the pedestals 21. Since the under-pedestal spaces 24 are continuous in the lateral direction, the wind flows to the outside of the transport container 11 through the air outlet openings 17. Also, since the first partitions 25a close the front sides of the under-pedestal spaces 24, even in a state in which the front door 16 is opened, it is possible to reduce leakage of air flowing through the under-pedestal spaces 24 and cause wind to flow through the under-pedestal spaces 24.

When a door (not shown) provided on a front face 41 of the functional unit 19 is opened, second joints 43 connected to the pipes used for supplying liquid and gas to the functional unit 19 and discharging liquid and gas from the functional unit 19 appear. Joints (not shown) connected to the wiring used for supplying electric power to the functional unit 19 and transmitting signals also appear. The second joints 43 are connected to the first joints 28 disposed on the transport container 11. The joints connected to the wiring are also connected to the joints disposed on the transport container 11. Thus, the connection between the functional unit 19 and the pipes 26 and the wiring can be easily established in a state in which the functional unit 19 is accommodated in the transport container 11.

The distance between the two side faces 40 of each functional unit 19 (the width W of each functional unit 19) is the same among all the functional units 19. The distance between the two pedestals 21 on which each functional unit 19 is placed are the same among all the pedestals 21. Since the dimensions are standardized, any functional unit 19 can be placed on any pedestals 21. Accordingly, functional units 19 freely combined can be disposed at any position within the transport container 11.

The height T1 of all the functional units 19 is greater than the width W of the functional unit 19 in the direction in which the functional units 19 are arrayed (the lateral direction). Therefore, it is possible to reduce the width of the base 12 of the transport container 11 in which a plurality of functional units 19 are disposed, while securing the volumes of the functional units 19. Accordingly, the area of a site necessary for installation of the container module 10 can be reduced.

The container module 10 is configured such that a value obtained by dividing the height T1 of the functional units 19 by a height T2 of an upper end 35 of the opening of the transport container 11, as measured from the pedestals 21, is 0.9 to 0.99. Since the height T1 of the functional units 19 can be increased in a range in which the functional units 19 can be accommodated in the transport container 11, it is possible to secure the volume of each functional unit 19 whose width is small as compared with the height T1. Therefore, it is possible to install an elongated device in the functional unit 19 and install many devices in the functional unit 19. Also, when the functional unit 19 is placed on the pedestals 21 or removed from the pedestals 21, the functional unit 19 can be tilted upward or downward by an amount corresponding to the gap formed between the functional unit 19 and the upper end 35 of the opening of the transport container 11. Therefore, movement of the functional unit 19 becomes easy.

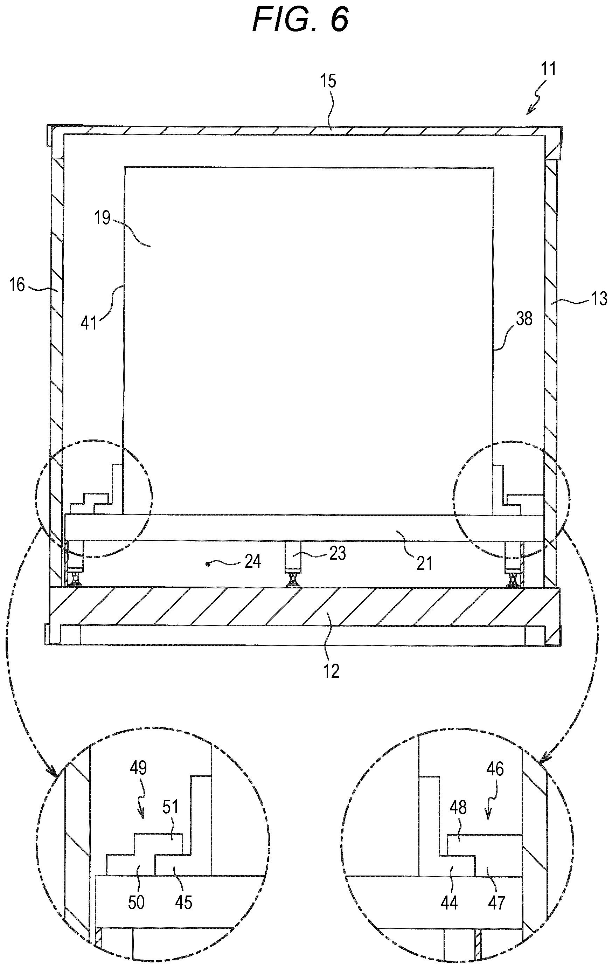

A second embodiment will be described with reference to FIG. 6. In the first embodiment, there has been described the case where the stoppers 30 for restricting rearward movements of the functional units 19 are provided. In contrast, in the second embodiment, there will be described the case where stoppers 46 and 49 for restricting upward movements of the functional units 19 in addition to forward and rearward movements of the functional units 19 are provided. The stoppers 46 and 49 are provided on the pedestals 21 in place of the stoppers 30 in the first embodiment. Portions identical to the portions having been described in the first embodiment are denoted by the same reference signs and their descriptions will not be repeated.

FIG. 6 is a sectional view of the container module 10 in the second embodiment. Each functional unit 19 has a first restricting portion 44 provided on the rear face 38. The first restricting portion 44 protrudes rearward (in the first direction). Each functional unit 19 has a second restricting portion 45 on the front face 41. The second restricting portion 45 protrudes forward (in the second direction).

The first stopper 46 is disposed above a rear end portion of each pedestal 21. The first stopper 46 has a first portion 47 which butts against the rear of the first restricting portion 44 when the first restricting portion 44 butts against the first stopper 46, and a second portion 48 which engages with or comes close to the top of the first restricting portion 44 when the first restricting portion 44 butts against the first stopper 46.

After the first restricting portion 44 having butted against the first stopper 46, the second stopper 49 is attached to a front end portion of the pedestal 21. The second stopper 49 has a first portion 50 which engages with or comes close to the front of the second restricting portion 45 and a second portion 51 which engages with or comes close to the top of the second restricting portion 45.

Since the first stopper 46 and the second stopper 49 engage with the first restricting portion 44 and the second restricting portion 45, thereby restricting the forward, backward, and upward movements of the functional unit 19, the number of stoppers can be reduced as compared with the case where a stopper is provided for each direction in which movement is restricted.

In the second embodiment, the case where the first restricting portion 44 protrudes in the first direction, and the second restricting portion 45 protrudes in the second direction has been described. However, the present invention is not limited thereto. Of course, a first restricting portion 44 which is concave in the second direction may be provided on each functional unit 19 and a second restricting portion 45 which is concave in the first direction may be provided on each functional unit 19. In this case, the first stopper 46 is formed to have a shape for engagement with the concave of the first restricting portion 44 and the second stopper 49 is formed to have a shape for engagement with the concave of the second restricting portion 45.

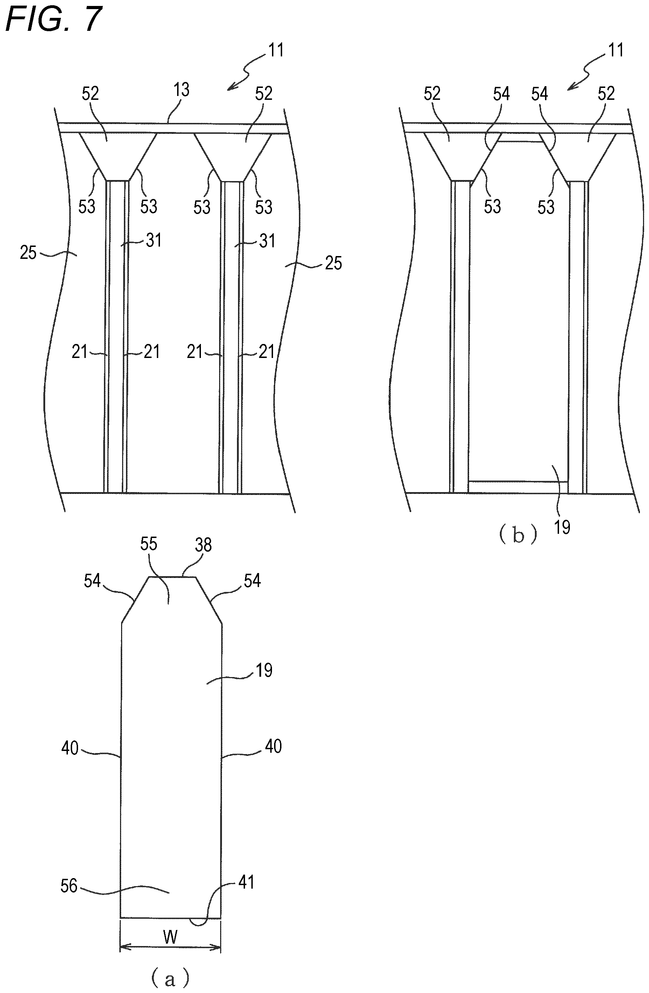

A third embodiment will be described with reference to FIG. 7. In the first embodiment, there has been described the case where each functional unit 19 has a rectangular shape as viewed from above. In contrast, in the third embodiment, a functional unit 19 having a non-rectangular shape will be described. Notably, portions identical to the portions having been described in the first embodiment are denoted by the same reference signs and their descriptions will not be repeated.

FIG. 7(a) is a plan view of a functional unit 19 of the container module 10 and the base 12 of the transport container 11 of the container module 10 in the third embodiment as viewed from above. The transport container 11 has stoppers 52 which are present between the rear ends of the pedestals 21 and the rear wall 13. The stoppers 52 are members formed of rubber or synthetic resin. The stoppers 52 are attached to the rear wall 13. Each stopper 52 is located rearward of two pedestals 21 located adjacent to each other. Each stopper 52 has two sloping surfaces 53. Due to the sloping surfaces 53, the width of the stopper 52 decreases toward its end in the second direction (toward the forward side).

An end portion 55 of the functional unit 19 in the first direction has two sloping surfaces 54 which connect the two side faces 40 and the rear face 38. Due to the sloping surfaces 54, the width of the end portion 55 decreases toward its end in the first direction (toward the rear side). The width W of an end portion 56 of the functional units 19 in the second direction is constant.

FIG. 7(b) is a plan view of the base 12 on which a functional unit 19 is disposed. When the sloping surfaces 54 of the functional unit 19 moving in the first direction (rearward) on the pedestals 21 come to engagement with the sloping surfaces 53 of the stoppers 52, movement of the functional unit 19 in the first direction is restricted. Since one stopper 52 restricts movements of two functional units 19 located adjacent to each other, the number of stoppers can be reduced, as compared with the case where a stopper is individually provided for each functional unit 19.

Since the width of the end portion 55 of the functional unit 19 in the first direction decreases toward its end in the first direction, it becomes easier to insert the functional unit 19 between functional units 19 disposed on the pedestals 21 such that a space corresponding to one functional unit remains therebetween. Furthermore, since the sloping surfaces 54 of the functional unit 19 connect the side faces 40 and the rear face 38, the volume of the functional unit 19 can be increased, as compared with the case where sloping surfaces connecting the front face 41 and the rear face 38 are provided.

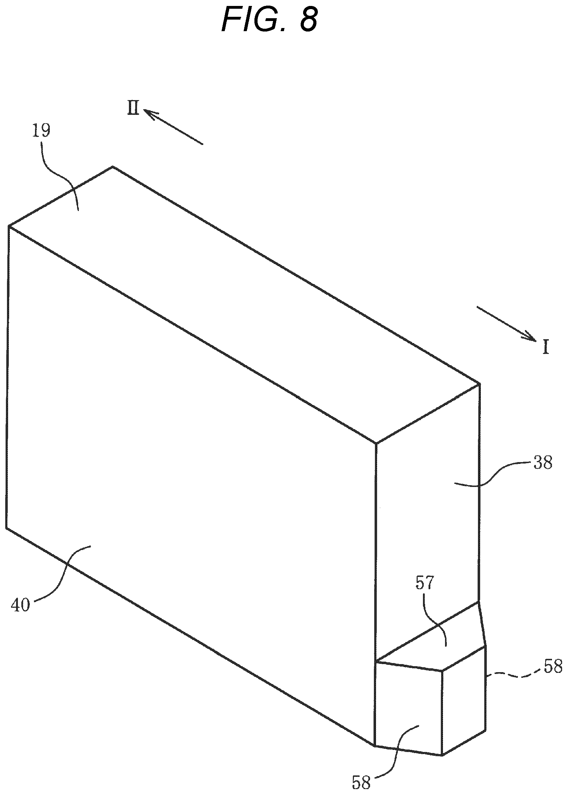

A fourth embodiment will be described with reference to FIG. 8. In the third embodiment, there has been described the case where the functional unit 19 has the end portion 55 having two sloping surfaces 54 connecting the side faces 40 and the rear face 38 of the functional unit 19. In contrast, in the fourth embodiment, there will be described the case where an end portion 57 having two sloping surfaces 58 is provided on a functional unit 19. Notably, portions identical to the portions having been described in the first embodiment are denoted by the same reference signs and their descriptions will not be repeated.

FIG. 8 is a perspective view of a functional unit 19 of a container module in the fourth embodiment. Arrow I of FIG. 8 shows the first direction of the container module, and arrow II shows the second direction of the container module. An end portion 57 of the functional unit 19 in the first direction is provided on a lower portion of the rear face 38 of the functional unit 19. The end portion 57 has sloping surfaces 58 sloping such that the sloping surfaces approach each other while extending in the first direction. Since the sloping surfaces 58 are connected to the side faces 40 of the functional unit 19. Therefore, the width of the end portion 57 of the functional unit 19 decreases toward its end in the first direction.

Since the width of the end portion 57 of the functional unit 19 decreases toward its end in the first direction, it becomes easier to insert the functional unit 19 between functional units 19 disposed on the pedestals 21 such that a space corresponding to one functional unit remains therebetween. Furthermore, since the end portion 57 of the functional unit 19 protrudes from the functional unit 19, it is unnecessary to reduce the volume of the functional unit 19, unlike the third embodiment.

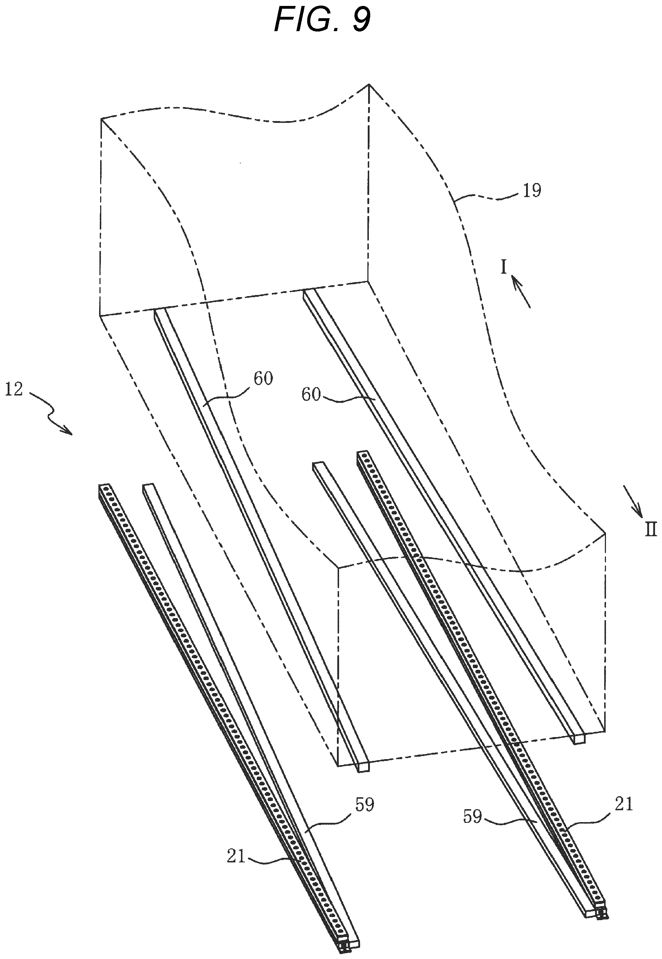

A fifth embodiment will be described with reference to FIG. 9, in the first to fourth embodiments, there has been described the case where, when each functional unit 19 is moved in the first direction, the side faces of the functional unit 19 are guided by the guides 32. In contrast, in the fifth embodiment, there will be described the case where third restricting portions 60 provided on each functional unit 19 are guided by guides 59. Notably, portions identical to the portions having been described in the first embodiment are denoted by the same reference signs and their descriptions will not be repeated.

FIG. 9 is a perspective view of a functional unit 19 and the base 12 of the container module 10 in the fifth embodiment. Arrow I of FIG. 9 shows the first direction of the container module, and arrow II shows the second direction of the container module. Although one set of pedestals 21 disposed on the base 12 are shown in FIG. 9, the connection portions 22, the floor board 25, etc. are not shown in the drawing.

The guides 59 are disposed on the base 12 to be located on the laterally inner side of the pedestals 21. The guides 59 are a pair of rails extending in the front-rear direction. The height of the guides 59 is smaller than the height of the pedestals 21, and the distance between the guides 59 in the lateral direction decreases toward their ends in the first direction.

The functional unit 19 has third restricting portions 60 which are provided on the bottom and are located on the laterally inner side of the guides 59 when the functional unit 19 is disposed on the pedestals 21. The third restricting portions 60 are a pair of rails extending in the front-rear direction of the functional unit 19. The distance between the two third restricting portions 60 in the lateral direction decreases toward their ends in the first direction.

Since the distance between the guides 59 in the lateral direction decreases toward their ends in the first direction and the distance between the third restricting portions 60 in the lateral direction also decreases toward their ends in the first direction, when the functional unit 19 is moved in the first direction and disposed on the pedestals 21, the third restricting portions 60 can be easily disposed on the inner side of the guides 59. Also, when the functional unit 19 is disposed on the pedestals 21, the guides 59 engage with the third restricting portions 60, whereby movement of the functional unit 19 in the lateral direction and movement of the functional unit 19 in the first direction are restricted. Furthermore, since the third restricting portions 60 protrude from the bottom of the functional unit 19, it is unnecessary to reduce the volume of the functional unit 19.

Notably, in the fifth embodiment, there has been described the case where the distance between the guides 59 in the lateral direction decreases toward their ends in the first direction, and the distance between the third restricting portions 60 in the lateral direction also decreases toward their ends in the first direction. However, the present invention is not limited thereto. It is of course possible to decrease the distance between the guides 59 in the lateral direction toward their ends in the second direction and also decrease the distance between the third restricting portions 60 in the lateral direction toward their ends in the second direction. In this case, the positions of the guides 59 and the third restricting portions 60 are set such that, when the functional unit 19 is disposed on the pedestals 21, the third restricting portions 60 are located on the outer side of the guides 59 in the lateral direction and between the guides 59 and the pedestals 21. In this case as well, when the functional unit 19 is moved in the first direction and disposed on the pedestals 21, the third restricting portions 60 can be easily disposed between the guides 59 and the pedestals 21.

In the fifth embodiment, the case where the guides 59 and the third restricting portions 60 are composed of rails has been described. However, the present invention is not limited thereto. It is of course possible to dispose guides 59 composed of rollers along the pedestals 21 in a scatter manner as in the case of the first embodiment, or to provide rollers on the guides 59 and the third restricting portions 60. Third restricting portions 60 composed of rollers may be disposed on the functional unit 19 in a scattered manner.

In the fifth embodiment, the case where the guides 59 are disposed on the inner side of the pair of pedestals 21 in the lateral direction has been described. However, the present invention is not limited thereto. It is of course possible to decrease the spacing between the pair of pedestals 21 in the lateral direction without changing the width of the functional unit 19, dispose the guides 59 on the outer side of the pedestals 21 in the lateral direction, and provide the third restricting portions 60 on the functional unit 19 at positions corresponding to the guides 59. In this case as well, the same action and effect as the container module in the fifth embodiment can be realized.

Although the present invention has been described on the basis of embodiments, it can be easily surmised that the present invention is not limited to the above-described embodiments, and various improvements and modifications can be made without departing from the purpose of the present invention.

In the embodiments, there has been described the container module 10 which produces combustible products by using, as raw materials, carbon dioxide obtained from exhaust gas and hydrogen obtained from water. However, the present invention is not limited thereto. It is of course possible to provide container modules 10 which play other roles. Examples of other container modules 10 include a module for producing hydrogen and oxygen by using water as a raw material and a module dedicated to purification of carbon dioxide from exhaust gas.

In the embodiments, there has been described the case where eight functional units 19 are installed in the transport container 11 having the pedestals 21 disposed therein and allowing installation of up to eight functional units 19. However, the present invention is not limited thereto. The number of functional units 19 installed in the transport container 11 is freely set in the range of 2 to 8 in accordance with the purpose of the container module 10. The transport container 11 may have vacancies on some pedestals 21. The maximum number of functional units 19 that can be installed in the transport container 11 is not limited to 8 and may be set freely.

In the embodiments, there has been described the case where the rollers 34 are provided on the guide 32 located between the functional units 19. However, the present invention is not limited thereto. It is of course possible to replace the guide 32, having the rollers 34, with a rail extending in the front-rear direction. In this case as well, it is possible restrict the position (in the lateral direction) of the functional unit 19 disposed on the pedestals 21 by the guide composed of the rail.

Furthermore, it is of course possible to provide, on at least portions of the side surfaces of the rail (the guide), portions (friction reducing portions) formed of a material which is small in the coefficient of friction with the functional unit 19 and is excellent in slipperiness. Examples of the material which is excellent in slipperiness include fluororesin, ultra high molecular weight polyethylene, and polyacetal resin. In this case as well, the friction reducing portions facilitate forward and rearward movements of the functional unit 19 along the guide. The rail may be formed of a material which is excellent in slipperiness.

In the embodiment, there has been described the case where the gaps 36 from which the air flowing through the under-pedestal spaces 24 flows out are provided between the pedestals 21 and the support portion 31. However, the present invention is not limited thereto. It is of course possible to provide the gaps 36 between the floor board 25 and the pedestals 21 or to form holes in the floor board 25 or the support portion 31 and use the holes as the gaps 36. The sizes and shapes of the gaps 36 and the holes can be freely set.

In the embodiments, there has been described the case where the air outlet openings 17 are formed in the side wall 14 of the transport container 11 at a position lower than the pedestals 21. However, the present invention is not limited thereto. The air outlet openings 17 may be provided in the rear wall 13 or the front door 16. The air outlet openings 17 may be provided in the side wall 14, the rear wall 13, or the front door 16 at a position higher than the pedestals 21, or the air outlet openings 17 may be provided in the roof 15.

In the embodiments, there has been described the case where the air inlet openings 18 are formed in the side wall 14 of the transport container 11 at a position higher than the top surfaces of the pedestals 21. However, the present invention is not limited thereto. The air inlet openings 18 may be provided in the rear wall 13, the front door 16, or the roof 15. Also, the air inlet openings 18 may be provided in the side wall 14, the rear wall 13, or the front door 16 at a position lower than the pedestals 2.

In the embodiments, there has been described the case where blowers (not shown) are provided at the air inlet openings 18. However, the present invention is not limited thereto. It is of course possible to provide blowers at the air outlet openings 17 so as to release the air within the transport container 11 to the outside of the transport container 11 through the air outlet openings 17. The transport container 11 may be configured such that blowers for introducing external air are provided at the air inlet openings 18 and blowers for releasing air are provided at the air outlet openings 17.

In the embodiments, there has been described the case where the first partitions 25a and 25b are disposed at the forward and reward ends of the pedestals 21. However, the present invention is not limited thereto. Of course, a plurality of first partitions 25a and 25b continuous in the lateral direction can be provided at intermediate positions under the pedestals 21, extending in the front-rear direction, such that a predetermined spacing in the front-rear direction is provided therebetween. In this case as well, under-pedestal spaces 24 which are sandwiched between the plurality of first partitions 25a and 25b and are continuous in the lateral direction can be formed under the pedestals 21 as in the case of the embodiments.

In the embodiments, there has been described the case where external air is introduced into the transport container 11 so as to air-cooling the functional units 19. However, the present invention is not limited thereto. It is of course possible to dispose a radiator at each air inlet opening 18. External air is introduced into the air inlet opening 18 so as to cool circulating water flowing through the radiator. The cooled circulating water is introduced to the functional units 19 so as to water-cool the functional units 19. It is of course possible to use both water cooling and air cooling.

In the embodiments, there has been described the case where all the functional units 19 have the same height T1. However, the present invention is not limited thereto. The functional units 19 may have different heights T1, so long as the heights T1 of the functional units 19 are greater than their widths W.

In the fourth embodiment, there has been described the case where the end portion 57 is provided at a lower portion of the rear face 38 of the functional unit 19. However, the present invention is not limited thereto. It is of course possible to provide the end portion 57 at an upper portion of the rear face 38 of the functional unit 19 or provide the end portion 57 over the entire rear face 38. It is of course possible to provide the end portion 57 at each of a plurality of positions on the rear face 38.

In the embodiments, there has been described the case where the floor board 25 is disposed on the base 12. However, the floor board 25 may be omitted because of the following reason. Even when the floor board 25 is not provided, when the functional unit 19 is disposed on the pedestals 21, the gap (excluding the gaps 36) between the pedestals 21 is closed by the functional unit 19.

The present disclosure can be realized as the following modes.

### [Application example 1]

A container module comprising a transport container and a plurality of functional units accommodated in the transport container, wherein the plurality of functional units are disposed in an array in the transport container, and all heights of the plurality of functional units are greater than their widths in a lateral direction in which the functional units are arrayed.

### [Application example 2]

The container module described in application example 1, wherein the functional units are arrayed in a line in the transport container.

### [Application example 3]

The container module described in application example 1 or 2, further comprising pedestals on which the functional units are disposed.

### [Application example 4]

The container module described in application example 3, further comprising a pipe disposed under the pedestals, wherein the pipe extends in the lateral direction.

### [Application example 5]

The container module described in application example 4, further comprising first joints which are disposed on the transport container and connected to the pipe, and second joints which are disposed on the functional units and are to be connected the first joints.

### [Application example 6]

The container module described in any of application examples 3 to 5, further comprising: rolling elements disposed in a portion of each pedestal with which a functional unit comes into contact, and a lifter for moving the rolling elements upward and downward in relation to the pedestal, wherein the functional unit moves in a first direction intersecting the lateral direction and is disposed on the pedestal, and the rolling elements rotate as a result of rubbing against the moving functional unit.

### [Application example 7]

The container module described in any of application examples 1 to 6, further comprising a guide located between the functional units located adjacent to each other, wherein the guide extends in the first direction.

### [Application example 8]

The container module described in application example 7, wherein friction reducing portions for reducing frictional force acting between the guide and the functional units are provided on the guide.

### [Application example 9]

The container module described in any of application examples 3 to 6, wherein the pedestals are individually provided for each of the functional units.

### [Application example 10]

The container module described in any of application examples 3 to 6, wherein the transport container has an air inlet opening and an air outlet opening, spaces respectively provided under the pedestals are continuous in the lateral direction, and the spaces communicate with the air inlet opening and the air outlet opening.

### [Application example 11]

The container module described in any of application examples 3 to 6, wherein a first partition for separating the spaces from a residual space within the transport container other than the spaces is provided on the pedestals.

### [Application example 12]

The container module described in any of application examples 3 to 6, wherein a gap is present between the pedestals located adjacent to each other.

### [Application example 13]

The container module described in any of application examples 1 to 12, further comprising stoppers for restricting movements of the functional units in the first direction, wherein each of the stoppers restricts movements of two of the functional units located adjacent to each other.

### [Application example 14]

The container module described in any of application examples 1 to 12, further comprising: a first stopper for restricting movement of a functional unit in the first direction, a second stopper for restricting movement of the functional unit in a second direction opposite the first direction, and first and second restricting portions provided on the functional unit, wherein the first stopper and the second stopper restrict upward movement of the functional unit via the first convex portion and the second convex portion.

### [Application example 15]

The container module described in any of application examples 3 to 6, wherein a value obtained by dividing the height of the functional units by a height to an upper end of an opening of the transport container from the pedestals falls in the range of 0.9 to 0.99.

### [Application example 16]

The container module described in any of application examples 6 to 9, wherein an end portion of each of the functional units in the first direction decreases in width in the lateral direction toward its end in the first direction.

### [Application example 17]

The container module described in any of application examples 6 to 9, wherein end portions of the functional units in the second direction opposite the first direction have the same width in the lateral direction.

### [Application example 18]

The container module described in any of application examples 6 to 9, further comprising a guide disposed along the pedestals and extending in the first direction, wherein each of the functional units has a third restricting portion which engages with the guide when the functional unit moves in the first direction.

### REFERENCE SIGNS LIST

10: container module
11: transport container
17: air outlet opening
18: air inlet opening
19: functional unit
21: pedestal
24: space
25a, 25b: first partition
26: pipe
28: first joint
29: rolling element
30, 52: stopper
32, 59: guide
34: roller (friction reducing portion)
35: upper end of opening
36: gap
42: space
43: second joint
44: first restricting portion
45: second restricting portion
46: first stopper
49: second stopper
55, 56, 57: end portion
60: third restricting portion
T1: height of functional unit
W: width of functional unit

## Claims

1. A container module comprising a transport container and a plurality of functional units accommodated in the transport container,
wherein the plurality of functional units are disposed in an array in the transport container, and
all heights of the plurality of functional units are greater than their widths in a lateral direction in which the functional units are arrayed.

2. A container module according to claim 1, wherein the functional units are arrayed in a line in the transport container.

3. A container module according to claim 1 or 2, further comprising pedestals on which the functional units are disposed.

4. A container module according to claim 3, further comprising a pipe disposed under the pedestals,
wherein the pipe extends in the lateral direction.

5. A container module according to claim 4, further comprising:
first joints which are disposed on the transport container and connected to the pipe, and
second joints which are disposed on the functional units and are to be connected the first joints.

6. A container module according to claim 3, further comprising:
rolling elements disposed in a portion of each pedestal with which a functional unit comes into contact, and
a lifter for moving the rolling elements upward and downward in relation to the pedestal,
wherein the functional unit moves in a first direction intersecting the lateral direction and is disposed on the pedestal, and
the rolling elements rotate as a result of rubbing against the moving functional unit.

7. A container module according to claim 6, further comprising a guide located between the functional units located adjacent to each other,
wherein the guide extends in the first direction.

8. A container module according to claim 7, wherein friction reducing portions for reducing frictional force acting between the guide and the functional units are provided on the guide.

9. A container module according to claim 3, wherein the pedestals are individually provided for each of the functional units.

10. A container module according to claim 9, wherein the transport container has an air inlet opening and an air outlet opening,
spaces respectively provided under the pedestals are continuous in the lateral direction, and
the spaces communicate with at least one of the air inlet opening and the air outlet opening.

11. A container module according to claim 10, wherein a first partition for separating the spaces from a residual space within the transport container other than the spaces is provided on the pedestals.

12. A container module according to claim 10, wherein a gap is present between the pedestals located adjacent to each other.

13. A container module according to claim 6, further comprising stoppers for restricting movements of the functional units in the first direction,
wherein each of the stoppers restricts movements of two of the functional units located adjacent to each other.

14. A container module according to claim 6, further comprising:
a first stopper for restricting movement of a functional unit in the first direction,
a second stopper for restricting movement of the functional unit in a second direction opposite the first direction, and
first and second restricting portions provided on the functional unit,
wherein the first stopper and the second stopper restrict upward movement of the functional unit via the first restricting portion and the second restricting portion.

15. A container module according to claim 6, wherein a value obtained by dividing the height of the functional units by a height to an upper end of an opening of the transport container from the pedestals falls in the range of 0.9 to 0.99.

16. A container module according to claim 6, wherein an end portion of each of the functional units in the first direction decreases in width in the lateral direction toward its end in the first direction.

17. A container module according to claim 6, wherein end portions of the functional units in the second direction opposite the first direction have the same width in the lateral direction.

18. A container module according to claim 6 or 7, further comprising a guide disposed along the pedestals and extending in the first direction,
wherein each of the functional units has a third restricting portion which engages with the guide when the functional unit moves in the first direction.

19. A functional unit which is used in such a manner that a plurality of the functional units are disposed at predetermined positions in an array,
wherein the functional unit has a height greater than a width of the functional unit in a lateral direction in which the functional units disposed at the predetermined positions are arrayed, and
the functional unit has a third restricting portion which restricts movement in the lateral direction as a result of engagement with a member provided at a corresponding one of the predetermined positions.

20. A functional unit which is used in such a manner that a plurality of the functional units are disposed at predetermined positions in an array,
wherein the functional unit has a height greater than a width of the functional unit in a lateral direction in which the functional units disposed at the predetermined positions are arrayed,
the functional unit moves in a first direction intersecting the lateral direction and is disposed at a corresponding one of the predetermined positions, and
a width, in the lateral direction, of an end portion of the functional unit in the first direction decreases toward its end in the first direction.

21. A functional unit which is used in such a manner that a plurality of the functional units are disposed at predetermined positions in an array,
wherein the functional unit has a height greater than a width of the functional unit in a lateral direction in which the functional units disposed at the predetermined positions are arrayed,
the functional unit moves in a first direction intersecting the lateral direction and is disposed at a corresponding one of the predetermined positions, and
the functional unit has a first restricting portion which restricts movement in the first direction as a result of engagement with a member provided at a corresponding one of the predetermined positions.
